Europäisches Patentamt

European Patent Office

Office européen des brevets

(19)

(11) Publication number: **0 480 534 A1**

## (12) EUROPEAN PATENT APPLICATION

(21) Application number: **91202639.0**

(22) Date of filing: **10.10.91**

(51) Int. Cl.⁵: **A47K 13/26**, F16B 2/04

(30) Priority: **11.10.90 NL 9002210**

(43) Date of publication of application:
**15.04.92 Bulletin 92/16**

(84) Designated Contracting States:
**BE DE FR LU NL**

(71) Applicant: **Naamloze Vennootschap
Koninklijke Sphinx
Boschstraat 24
NL-6211 AX Maastricht(NL)**

(72) Inventor: **Lahaye, René Louis Jean
Luthulisingel 54,
4105 HA Culemborg(NL)**

(74) Representative: **de Vries, Johannes Hendrik
Fokke et al
Octrooibureau Los en Stigter B.V. P.O. Box
20052
NL-1000 HB Amsterdam(NL)**

(54) **Device for fastening a seat on a lavatory bowl.**

(57) A device for fastening a seat on a lavatory bowl (1) equiped with two mounting holes (6), comprises two fastening pins (5). Each pin (5) is adapted to be mounted in a mounting hole (6) of the lavatory bowl (1). Further, each fastening pin (5) at its end to be inserted into the mounting hole (6) is provided with a deformable, preferably ring-shaped clamping part (7), the outer dimension of which is smaller than the dimension of the mounting hole (6) and which, by axial compression, can expand in radial direction upto an outer dimension greater than the dimension of the mounting hole (6). At its other end each fastening pin (5) has a manually operable actuating element (26) for axially compressing the clamping part (7).

fig.2

The invention relates to a device for fastening a seat on a lavatory bowl equiped with two mounting holes, comprising two fastening pins, each pin being adapted to be mounted in a mounting hole of the lavatory bowl.

Such devices are known in several embodiments. For mounting the seat on the lavatory bowl the fastening pins are inserted through the mounting holes, wherein a ring and a wing nut must be mounted on the threaded end protruding underneath the edge of the lavatory bowl. Mounting the seat on the lavatory bowl is rather cumbersome due to the actions to be made from the lower side of the lavatory bowl. As the know device occupies a part of the rear edge of the lavatory bowl, this device should be removed regularly for a good cleaning of the device itself and the lavatory bowl, which in practice occurs hardly or not at all in view of the cumbersome mounting of the know device.

The invention aims to provide a device of the above mentioned type by means of which the seat can be mounted on the lavatory bowl in a simple manner.

To this end the device according to the invention is characterized in that each fastening pin at its end to be inserted into the mounting hole is provided with a deformable clamping part, the outer dimension of which is smaller than the dimension of the mounting hole and which, by axial compression, can expand in radial direction upto an outer dimension greater than the dimension of the mounting hole, wherein each fastening pin at its other end has a manually operable actuating element for axially compressing the clamping part.

In this manner a device is obtained by means of which the seat can be fastened on the lavatory bowl by inserting the fastening pins in the corresponding mounting holes and by compressing the clamping parts by means of the actuating elements, whereby the device and thereby the seat is fastened on the lavatory bowl. All actions required can be carried out at the upper side of the lavatory bowl. For removing the device the actuating elements need only to be manipulated manually, whereafter the device with the seat can be unfastened from the lavatory bowl. A regular cleaning of the complete upper edge of the lavatory bowl and the device is possible in this manner without cumbersome actions at the underside of the lavatory bowl.

According to a simple embodiment of the invention the clamping part of each fastening pin is enclosed between a ring provided at the end of the fastening pin to be inserted into the mounting hole, and a sleeve surrounding the fastening pin with play, wherein the fastening pin is movable in axial direction with respect to the sleeve by means of the actuating element.

A very simple mounting is obtained if the actuating element of each fastening pin comprises a substantially L-shaped lever at its corner part pivotably connected to the end of the fastening pin, wherein the short leg of the L-shaped lever cooperates directly or indirectly with the sleeve as a lever arm and the long leg is manually operable. Thereby it is only required to pivot the lever downwardly and upwardly, respectively, for compressing and releasing, respectively of the clamping ring, so that mounting and unfastening the device with seat is very simple.

The diameter of the mounting holes of the known lavatory bowls usually varies from approximately 13 upto 15 mm, so that the length of the short leg of the lever should be such that a sufficient radial expansion of the clamping ring is always guaranteed. In order to prevent damage to device at relatively small diameter, a spring is provided between the deformable clamping part and the sleeve according to a first alternative. The diameter variation of the mounting holes is in this case compensated by a greater of smaller compression of the spring.

As an alternative of the invention it is possible that the L-shaped lever is pivotably connected with a nut rotatably mounted on the threaded end of the fastening pin. By rotating the nut the distance along which the clamping part is axially compressed can be adjusted.

In order to prevent damage by an incorrect adjustment in this case, a slot is provided in the threaded end of each fastening pin according to a favorable embodiment of the invention. Thereby it is obtained that in case of an adjustment for a too great compression of the clamping part, the slot in the threaded end is pushed to and the nut "clicks" along the thread.

According to an other alternative embodiment of the invention a mounting bush with a predetermined diameter is fixed in each mounting hole of the lavatory bowl. Thereby the diameter variation of the mounting holes is compensated by means of the mounting bush.

The seat can be coupled with the fastening pins in several ways. According to a favorable embodiment of the invention this coupling is obtained in that the fastening pins form part of a mounting piece with two openings corresponding with the mounting holes of the lavatory bowl, wherein each fastening pin passes through an opening, wherein the sleeve with a flange edge engages the lower side of the mounting piece, while a clamping plate is provided at the upper side between the actuating element and the mounting piece wherein the seat and possibly a cover are coupled with the mounting piece.

In order to prevent shifting of the mounting piece with respect to the fastening pins in this case, it is preferred according to the invention that the facing surfaces of the mounting piece and the clamping plates and possibly the flange edges of the sleeves are made rough.

For the sake of a simple cleaning of the different parts the seat and possibly the cover are detachably coupled with the mounting piece according to a favorable embodiment.

The invention will be further explained by reference to the drawings in which some embodiments of the device according to the invention are schematically shown.

Fig. 1 is a perspective view of a lavatory bowl on which a seat and a cover are fastened by means of an embodiment of the device according to the invention.

Fig. 2 is a section according to the line II-II fig. 1.

Fig. 3 is a partially shown section corresponding with fig. 2, wherein the clamping part is in the non-compressed situation.

Fig. 4 is a partially shown section corresponding with fig. 2 of an alternative embodiment of the device according to the invention, wherein the clamping part is in the compressed situation .

Fig. 5 is a partially shown section corresponding with fig. 2 of a different embodiment of the device according to the invention, wherein the clamping part is in the compressed situation.

Fig. 6 is a partially shown top view of the mounting piece of the device of fig. 1, wherein the fastening pin, the seat and the cover are omitted.

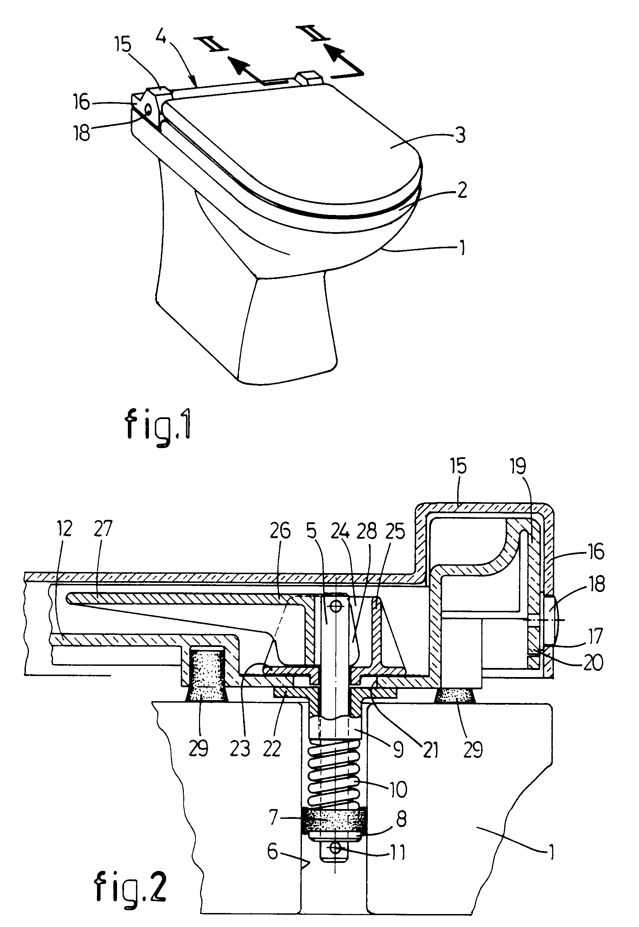

Fig. 1 shows a lavatory bowl 1, on which a seat 2 and a cover 3 are fastened by means of a device 4. This device 4 comprises two fastening pins 5, only one of which is shown in fig. 2. Each fastening pin 5 is inserted with one end in a mounting hole 6 of the lavatory bowl 1, which end comprises a deformable clamping ring 7 consisting for example of rubber and enclosed between a ring 8 mounted at this end and a sleeve 9 surrounding the fastening pin 5 with play. Between the sleeve 9 and the clamping ring 7 a spring 10 is mounted as will be further explained hereinafter. The ring 8 is fixed by means of a pin 11 inserted into the corresponding end of the fastening pin 5.

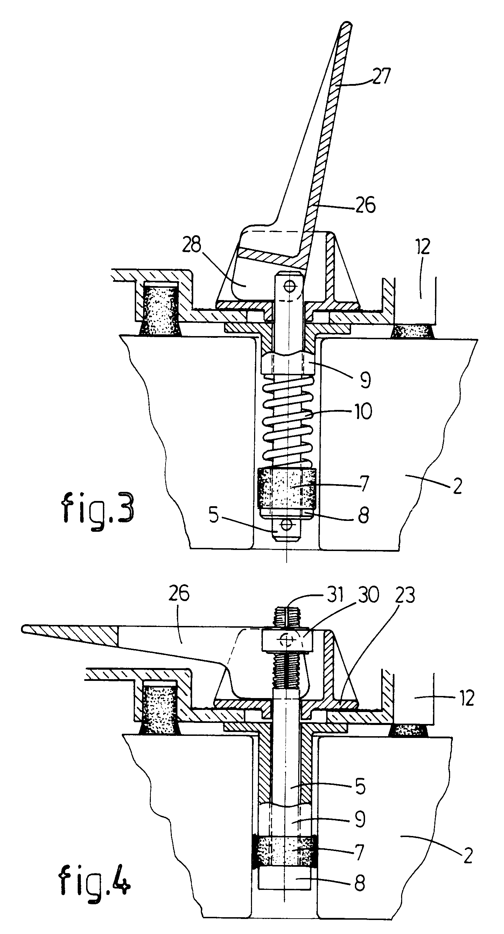

The clamping ring 7 in its non-compressed situation has a diameter smaller then the diameter of the mounting hole 6 as shown in fig. 3. By axially compressing the clamping ring 7 the same expands in radial direction, whereby the clamping ring 7 is clamped against the wall of the mounting hole 6, whereby the fastening pin 5 is anchored in the mounting hole 6. The maximum diameter which can be obtained by compressing the clamping ring 7, is greater than the greatest diameter of the mounting holes 6 to be expected, so that a good anchoring of the fastening pins 5 in the mounting holes is always guaranteed. The spring 10 is provided for taking diameter variations of the mounting holes 6, which spring can be compressed in case of a smaller diameter of the mounting holes 6 as appears from a comparison between fig. 2 and 3.

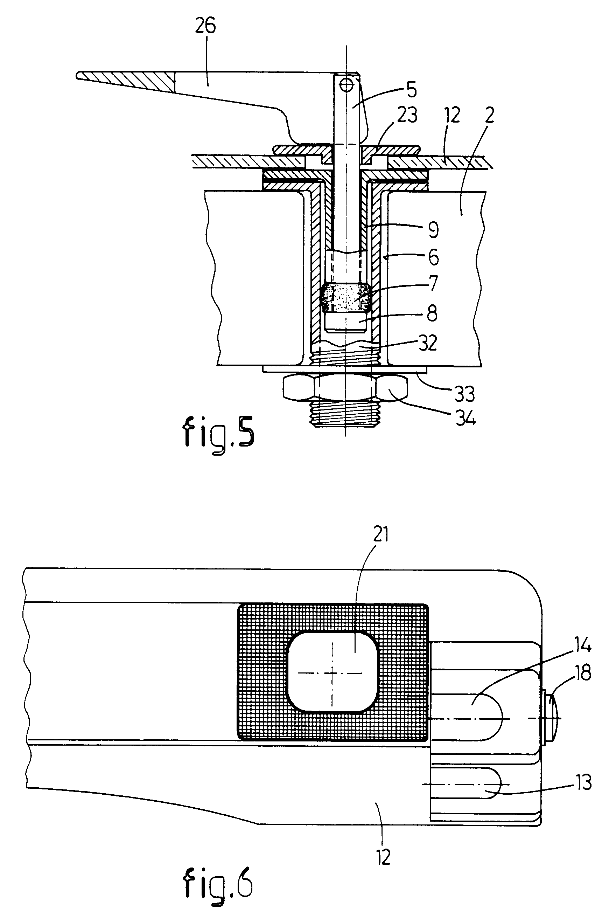

The fastening pins 5 are part of a mounting piece which is partially shown in a top view in fig. 6. This mounting piece 12 is provided at both sides with a bearing slot 13 for the shafts of the seat 2 not further shown, and with bearing slots 14 for the shafts of the cover 3 not further shown. These shafts are enclosed in the bearing slots 13, 14 by means of a locking cap 15 attached to the mounting piece 12 by means of a detachable snap connection. To this end an opening 17 is provided in the side walls 16 of the locking cap 15, in which cams 18 formed at both sides of the mounting piece 12 engage. These cams 18 only one of which is shown in fig. 2, are each provided on a spring lip 20 formed in the corresponding side wall 19 of the mounting piece 12.

The mounting piece 12 is provided at both sides with openings 21 through which the fastening pins 5 extend. The sleeves 9 abut with a flange edge 22 against the lower surface of the mounting piece 12 whereas at the upper side the fastening pin 5 extends through a clamping plate 23 having upright walls 24 and 25. At the upper end of the fastening pins an actuating element 26 is provided, by means of which the clamping rings 7 can be compressed in axial direction. These actuating elements 26 consist of a L-shaped lever with a long leg 27 and a short leg 28. The lever 26 is pivotably connected at its corner part with the corresponding fastening pin, wherein the lever 26 is pivotable between a position shown in fig. 3 in which the clamping ring 7 is not compressed and is free from the wall of the mounting hole 6, and the position shown in fig. 2 in which the clamping ring 7 is compressed and is clamped against the wall of the mounting hole 6. The long leg 27 of the lever 26 is manually operable, wherein the short leg 28 as lever arm pulls the fastening pin 5 upwardly during moving from the position shown in fig. 3 to the position shown in fig. 2, while the sleeve 9 is held at its location through the clamping plate 23 and the mounting piece 12. The facing surfaces of the clamping plate 23 and the mounting piece 12 and possibly the facing surfaces of the flange edge 22 and the mounting piece 12 are made rough so that in the mounted position the mounting piece 12 is unmovable with respect to the fastening pin 5 by the clamping between the clamping plate 23 and the flange edge 22. In the mounted position the mounting piece is pressed on the upper side of the lavatory bowl 1 at the fastening pins, wherein three support cams 29 are provided in the lower surface of the mounting piece, which support cams are preferably made of rubber.

In the position shown in fig. 3 the mounting piece 12 can be slided so that the seat 2 can be positioned well in register with the upper edge of the lavatory bowl 1.

From the foregoing it will be clear that mounting the seat 2 and the cover 3 on the lavatory bowl 1 by means of the device 4 described is very simple. The mounting piece 12 is placed at the rear edge of the lavatory bowl 1 with the fastening pins 5 in the mounting holes 6, wherein the levers 26 are in the position of fig. 3. Subsequently the seat 2 is placed with the shafts in the bearing slots 13 and the mounting piece 12 is slided in such a manner that the seat 2 is accurately in register with the upper edge with the lavatory bowl 1. Subsequently the levers 26 are moved into the position of fig. 2, whereby the mounting piece 12 is clamped in a fixed position at the rear edge of the lavatory bowl 1 and the seat 2 lies unmovable on the upper edge of the lavatory bowl 1. After mounting the cover 3 the locking cap 15 is clicked on the mounting piece 12. Due to this simple mounting the mounting piece 12 can also easily be removed so that a regular cleaning of the complete upper edge of the lavatory bowl 1 and all parts of the device 4 is possible.

In fig. 4 a section corresponding with fig. 2 is partially shown, wherein corresponding parts are indicated with the same reference numerals. In this embodiment the lever 26 is pivotably connected with a nut 30, for compensating the variation of the diameter of the mounting holes 6, which nut is mounted on the threaded end of the fastening pin 5. In this case the clamping ring 7 is directly enclosed between the ring 8 and the sleeve 9. By rotating the nut 30 the distance along which the clamping ring 7 is compressed in axial direction, can be adjusted. The ring 8 is unitary with the fastening pin 5 in this embodiment.

Further the threaded end of the fastening pin is provided with a slot 31 which can be pushed to due to the elastic properties of the material of the fastening pin 5. If the slot 31 is pushed to, the nut 30 can click along the thread in axial direction without rotation. In case of an incorrect adjustment of the nut 30 on the fastening pin 5, whereby the axial compression of the clamping ring 7 would be too great, damage of the fastening pin 5 is obviated in this manner because the nut 30 will then click on the thread.

In fig. 5 another alternative embodiment is partially shown in section, wherein corresponding parts are indicated with the same reference numerals. For compensating the diameter variation of the mounting holes 6 mounting bushes 32 with predetermined diameter are used in this case, which are fixed in the mounting hole 6 by means of a ring 33 and a nut 34. This mounting bush 32 is mounted in the mounting holes 6 once-only whereafter mounting the seat and the cover takes place by means of the mounting piece 12 and the fastening pins 5. In this case the lever 26 is directly connected with the fastening pin 5 and the clamping ring 7 is directly enclosed between the ring 8 and the sleeve 9.

All parts of the device 4 described can be made of a plastic material in a suitable manner with the exception of the spring 10 which consists preferably of stainless steel.

Although a clamping ring is used in the embodiments described, it is of course also possible to use a clamping part made in a different manner, for example a clamping part comprising two segments of a circle.

The invention is not restricted to the above-described embodiments which can be varied in a number of ways within the scope of the invention. It is for example possible to use the mounting piece 12 also for mounting a single seat without cover.

## Claims

1. Device for fastening a seat on a lavatory bowl equiped with two mounting holes, comprising two fastening pins, each pin being adapted to be mounted in a mounting hole of the lavatory bowl, **characterized in that** each fastening pin at its end to be inserted into the mounting hole is provided with a deformable, preferably ring-shaped clamping part, the outer dimension of which is smaller than the dimension of the mounting hole and which, by axial compression, can expand in radial direction upto an outer dimension greater than the dimension of the mounting hole, wherein each fastening pin at its other end has a manually operable actuating element for axially compressing the clamping part.

2. Device according to claim 1, **characterized in that** the clamping part of each fastening pin is enclosed between a ring provided at the end of the fastening pin to be inserted into the mounting hole, and a sleeve surrounding the fastening pin with play, wherein the fastening pin is movable in axial direction with respect to the sleeve by means of the actuating element.

3. Device according to claim 2, **characterized in that** the actuating element of each fastening pin comprises a substantially L-shaped lever at its corner part pivotably connected to the end of the fastening pin, wherein the short leg of the L-shaped lever cooperates directly or indirectly with the sleeve as a lever arm and the long leg is manually operable.

4. Device according to claim 3, **characterized in that** a spring is provided between the deformable clamping part and the sleeve.

5. Device according to claim 3, **characterized in that** the L-shaped lever is pivotably connected with a nut rotatably mounted on the threaded end of the fastening pin.

6. Device according to claim 5, **characterized in that** a slot is provided in the threaded end of each fastening pin.

7. Device according to claim 3, **characterized in that** a mounting bush with a predetermined diameter is fixed in each mounting hole of the lavatory bowl.

8. Device according to anyone of the preceding claims, **characterized in that** the fastening pins form part of a mounting piece with two openings corresponding with the mounting holes of the lavatory bowl, wherein each fastening pin passes through an opening, wherein the sleeve with a flange edge engages the lower side of the mounting piece, while a clamping plate is provided at the upper side between the actuating element and the mounting piece wherein the seat and possibly a cover are coupled with the mounting piece.

9. Device according to claim 8, **characterized in that** the facing surfaces of the mounting piece and the clamping plates and possibly the flange edges of the sleeves are made rough.

10. Device according to claim 8 or 9, **characterized in that** the seat and possibly the cover are detachably coupled with the mounting piece.

11. Device according to claim 10. **characterized in that** the seat and possibly the cover has a shaft part at both sides, which shaft parts can be placed in correspondingly shaped bearing slots of the mounting piece, wherein a locking cap locks the shaft parts in the bearing slots.

fig.1

fig.2

fig.3

fig.4

fig.5

fig.6

European Patent Office

# EUROPEAN SEARCH REPORT

| | DOCUMENTS CONSIDERED TO BE RELEVANT | | EP 91202639.0 |
|---|---|---|---|

| Category | Citation of document with indication, where appropriate, of relevant passages | Relevant to claim | CLASSIFICATION OF THE APPLICATION (Int. Cl.5) |
|---|---|---|---|
| A | <u>DE - A - 3 035 499</u> (BAILLIE) * Fig. 1,2 * -- | 1,8 | A 47 K 13/26 F 16 B 2/04 |
| A | <u>DE - A - 2 246 833</u> (OWO PRESSWERK AG) * Fig. 1 * -- | 1,8 | |
| A | <u>GB - A - 2 200 402</u> (ROBERTS CONSOLIDATED INDUSTRIES) * Abstract * ---- | 1,3,4, 8 | |
| | | | **TECHNICAL FIELDS SEARCHED (Int. Cl.5)** A 47 K 13/00 F 16 B 2/00 F 16 B 9/00 F 16 B 13/00 |
| The present search report has been drawn up for all claims | | | |

| Place of search | Date of completion of the search | Examiner |
|---|---|---|
| VIENNA | 23-12-1991 | RIEMANN |